# EUROPÄISCHE PATENTSCHRIFT

(11) **EP 3 649 519 B1**
(45) Veröffentlichungstag und Bekanntmachung des Hinweises auf die Patenterteilung: **25.05.2022**
(21) Anmeldenummer: 18729395.6
(22) Anmeldetag: 04.06.2018
(51) Int. Cl.: H04W 4/02, G05D 1/02, G01S 19/48, G01C 21/32, G01S 19/42, G08G 1/01, H04W 4/46

(54) **VERFAHREN ZUR VERIFIZIERUNG EINER DIGITALEN KARTE EINES HÖHER AUTOMATISIERTEN FAHRZEUGS, ENTSPRECHENDE VORRICHTUNG UND COMPUTERPROGRAMM**
METHOD FOR VERIFYING A DIGITAL MAP IN A MORE HIGHLY AUTOMATED VEHICLE, CORRESPONDING DEVICE AND COMPUTER PROGRAM
PROCÉDÉ POUR FAIRE VÉRIFIER LA CARTE NUMÉRIQUE D'UN VÉHICULE TRÈS AUTOMATISÉ, DISPOSITIF CORRESPONDANT ET PROGRAMME D'ORDINATEUR

(30) Priorität: 07.07.2017 DE 102017211613
(43) Veröffentlichungstag der Anmeldung: 13.05.2020
(73) Patentinhaber: Robert Bosch GmbH, 70442 Stuttgart (DE)
(72) Erfinder: HASBERG, Carsten, 74360 Ilsfeld-Auenstein (DE); RASP, Philipp, 72827 Wannweil (DE); HIENDRIANA, Danny, 71636 Ludwigsburg (DE); FROMMHERZ, Valentin, 74076 Heilbronn (DE); ALAWIEH, Ali, 74232 Abstatt (DE); REISTER, Fabian Dominik, 75378 Bad Liebenzell (DE); KHAN, Muhammad Sheraz, 74074 Heilbronn (DE); PAULS, Jan-Hendrik, 71723 Grossbottwar (DE)
(86) Internationale Anmeldenummer: PCT/EP2018/064641
(87) Internationale Veröffentlichungsnummer: WO 2019/007605

(56) Entgegenhaltungen:
- CN-A- 1 979 583
- US-A1- 2017 122 749
- J. A. Farrell ET AL: "Best Practices for Surveying and Mapping Roadways and Intersections for Connected Vehicle Applications", , 15. Mai 2016 (2016-05-15), XP055452781, Gefunden im Internet: URL:http://www.cts.virginia.edu/wp-content /uploads/2014/04/Mapping-Final-Report-FINA L-20160915.pdf [gefunden am 2018-02-21]

## Beschreibung

Die Erfindung betrifft ein Verfahren zur Verifizierung einer digitalen Karte eines höher automatisierten Fahrzeugs (HAF), insbesondere eines hochautomatisierten Fahrzeugs und eine Vorrichtung zu diesem Zweck.

### Stand der Technik

Angesichts einer Zunahme des Automatisierungsgrades von Fahrzeugen werden immer komplexere Fahrerassistenzsysteme eingesetzt. Für solche Fahrerassistenzsysteme und Funktionen, wie z.B. dem hochautomatisierten Fahren oder dem vollautomatisiertem Fahren, wird eine große Zahl von Sensoren im Fahrzeug benötigt, die eine exakte Erfassung des Fahrzeugumfelds ermöglichen.

Im Folgenden werden unter höher automatisiert all diejenigen Automatisierungsgrade verstanden, die im Sinne der Bundesanstalt für Straßenwesen (BASt) eine automatisierte Längs- und Querführung mit steigender Systemverantwortung entsprechen, d.h. das hoch- und vollautomatisierte Fahren.

Im Stand der Technik ist eine Vielzahl von Möglichkeiten offenbart, ein Verfahren zum Betreiben eines hochautomatisierten Fahrzeugs (HAF) durchzuführen. Um dabei die Lokalisierung eines hochautomatisierten Fahrzeugs (HAF) in einer digitalen Karte zu erhöhen, ist es erforderlich, die Genauigkeit der digitalen Karte garantieren zu können, wobei hier das Problem auftritt, dass kurzfristige Streckenänderungen, die beispielsweise durch Baustellen, Unfälle oder andersartige Umstände bedingt sind, nicht oder nur unvollständig in digitalen Karten berücksichtigt werden können oder derart kurzfristig auftreten, dass ein höher automatisiertes Fahrzeug (HAF), insbesondere ein hochautomatisiertes Fahrzeug, über diese kurzfristigen Änderungen nicht schnell genug verfügen kann und die Steuerung des Fahrzeugs dem Fahrer überlassen werden muss. Dies kann unerwünscht und gegebenenfalls auch kritisch hinsichtlich der Verkehrssicherheit sein.

Um das Fahrzeug in möglichst allen Situationen höher automatisiert zu steuern, ist es also notwendig, eine weitestgehend fehlerfreie und der Wirklichkeit entsprechende digitale Karte zur Verfügung zu haben.

Ein weiterer diesbezüglicher Aspekt ergibt sich aus dem Umstand, dass traditionelle Kartierungsverfahren, beispielsweise mithilfe von Kraftfahrzeugen, Flugzeugen oder Satelliten, sehr kostenintensiv sind. Daher ist es wünschenswert, eine möglichst genaue Einschätzung dahingehend machen zu können, ob eine erneute Kartierung eines Kartenausschnittes einer digitalen Karte notwendig ist oder nicht. Grundlage für eine solche Einschätzung ist dabei stets eine Aussage bezüglich der Akkuratesse der digitalen Karte.

Hinsichtlich der Aussagekraft von Einschätzungen zur Aktualität einer digitalen Karte basierend auf Sensordaten ist ferner zu bemerken, dass jeder Sensortyp, der zur Verifizierung einer Karte verwendet wird, bestimmten spezifischen Einschränkungen unterliegt. Beispielsweise ist eine Kamera dahingehend eingeschränkt, dass sie nur Objekte aufnehmen kann, die zum Zeitpunkt der Aufnahme nicht durch andere Objekte verdeckt sind oder durch Lichteffekte unkenntlich gemacht werden. Solche Effekte können beispielsweise unter dem Begriff der Robustheit einer Detektion durch einen Sensor zusammengefasst werden.

Es ist daher eine Aufgabe der vorliegenden Erfindung, ein verbessertes Verfahren zur Verifizierung einer digitalen Karte eines hochautomatisierten Fahrzeugs (HAF) oder eines vollautomatisierten Fahrzeugs (VAF), und eine verbesserte Vorrichtung zu diesem Zweck bereitzustellen, mit dem die Aktualität einer digitalen Karte zuverlässig festgestellt werden kann und das eine akkurate Einschätzung erlaubt, ob eine erneute Kartierung eines Kartenausschnittes notwendig ist oder nicht, wobei Effekte, die aus sensorspezifischen Einschränkungen resultieren, weitestgehend vermieden werden sollen.

### Offenbarung der Erfindung

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zur Verifizierung einer digitalen Karte eines hochautomatisierten Fahrzeugs (HAF) oder eines vollautomatisierten Fahrzeugs (VAF),

bereitgestellt, umfassend die folgenden Schritte:
S1 zur Verfügung stellen einer digitalen Karte, vorzugsweise einer hochgenauen digitalen Karte;
S2 Bestimmung einer aktuellen Referenzposition und Lokalisierung der Referenzposition in der digitalen Karte;
S3 Feststellen von zumindest einer Ist-Merkmalseigenschaft eines Merkmals in der Umgebung der Referenzposition, wobei das Feststellen durch ein Objektdetektionssystem des Fahrzeugs durchgeführt wird;
S4 Vergleich der Ist-Merkmalseigenschaft mit einer Soll-Merkmalseigenschaft des Merkmals und Ermittlung zumindest eines Differenzwertes als Ergebnis des Vergleichs; und
S5 Verifizierung der digitalen Karte zumindest teilweise auf Grundlage des Differenzwertes, wobei die digitale Karte als nicht aktuell eingestuft wird, wenn der Differenzwert einen festgelegten Schwellwert einer Abweichung erreicht oder überschreitet, und als aktuell eingestuft wird, wenn der Differenzwert unterhalb des festgelegten Schwellwerts der Abweichung bleibt.

Dabei ist vorgesehen, dass die zumindest eine Soll-Merkmalseigenschaft des zumindest einen Merkmals in der digitalen Karte gespeichert ist, wobei vorzugsweise eine Mehrzahl an Soll-Merkmalseigenschaften wiederum einer Mehrzahl an Merkmalen in der digitalen Karte gespeichert sind, und dass im Schritt S3 das Feststellen der zumindest einen Ist-Merkmalseigenschaft zumindest teilweise auf Grundlage der zumindest einen Soll-Merkmalseigenschaft erfolgt.

Vorzugsweise beinhaltet Schritt S3, dass eine Vielzahl von Informationsquellen verwendet wird, wobei die Informationsquellen zumindest eine oder mehrere Informationsquellen aus der folgenden Gruppe von Informationsquellen umfassen:
- Car-to-Infrastructure Systeme (C2I), die Daten an Fahrzeuge senden oder Daten von Fahrzeugen sammeln (z.B. über WLAN, LTE);
- Car-to-Car Systeme (C2C), die Daten an andere Fahrzeuge senden, vorzugsweise über ein Drahtloskommunikationsnetzwerk (WLAN) oder LTE;
- Navigationssysteme, die Straßenverläufe, Steigungen, Fahrbahnspuren und Infrastrukturinformationen im Kartenmaterial gespeichert haben;
- Datenbanken im Internet, in denen vorzugsweise Straßendaten gespeichert sind;
- Datenbanken in fahrzeugeigenen Systemen, in denen Daten langfristig gespeichert werden können;
- Fahrzeugsysteme, vorzugsweise eine Head Unit, die auf das Internet zugreifen können und aktuelle Daten aus Datenbanken ermitteln können.
- Hochgenaue Karten für hochautomatisierte oder vollautomatisiertes Fahren, in denen Daten für Lokalisierungsaufgaben abgespeichert sind, vorzugsweise Objekte mit Positionen und Abmessungen;
- Fahrerassistenzsysteme, umfassend eine oder mehrere Systeme aus den folgenden Untergruppen:
   o Spurhaltsysteme (Lane-Keeping-Support, LKS), die vorzugsweise mittels kamerabasierten Systemen eine Fahrspur ermitteln und ein Fahrzeug bei einem unfreiwilligen Verlassen der Spur wieder in die Spur zurücklenken;
   o Verkehrszeichensysteme, die auf Basis von visuellen Systemen, vorzugsweise von Videokameras, eine vorgeschriebene Geschwindigkeit ermitteln;
   o Objektdetektionssysteme, die vorzugsweise visuelle Sensoren, besonders bevorzugterweise Videokameras verwenden; und
   o Smartphones, insbesondere Kameras von Smartphones.

Die vorgenannten Informationsquellen sind in modernen Gesellschaften beinahe omnipräsent. Beispielhaft sei auf die Vielzahl der täglich verkehrenden höher oder hochautomatisierten Fahrzeuge verwiesen, die an allen wichtigen Infrastrukturknotenpunkten installierten Kameras oder die von Benutzern weltweit gemachten Aufnahmen von Smartphone-Kameras, die an zentralen Stellen des Netzes, beispielweise in einer cloud, hochgeladen werden. In einer Ausführungsform der vorliegenden Erfindung ist daher vorgesehen, diese bislang nie dagewesene Informationsfülle für die Verifizierung einer digitalen Karte zu nutzen und mehrere dieser Informationsquellen für die Verifizierung der digitalen Karte anzuzapfen.

In einer bevorzugten Ausführungsform werden die seitens der Vielzahl von Informationsquellen gelieferten Informationen durch geeignete Algorithmen gefiltert und zusammengeführt werden, um die Ist-Merkmalseigenschaft festzustellen.

Ferner umfasst das Verfahren desweiteren den Schritt S6, bei dem ein Übermitteln einer Information die Fahrzeugposition und den Differenzwert betreffend an einen zentralen Server erfolgt.

Vorteilhafterweise wird in dem Fall, dass die Karte in Schritt S5 als nicht aktuell eingestuft wurde, zumindest eine der folgenden Aktionen ausgeführt wird:
- Anforderung einer Aktualisierung der digitalen Karte bei einem zentralen Server;
- Erneutes Durchführen der Schritte S3 und S4; und
- Anforderung der Entsendung eines Kartierungsfahrzeugs, insbesondere eines Kraftfahrzeugs und/oder eines Flugzeugs zur Kartierung einer Umgebung der Referenzposition.

Für das weitere Vorgehen ist es in einer Ausführungsform der Erfindung vorteilhafterweise vorgesehen, dass der Schritt S3 des zur Verfügung Stellens der Soll-Merkmalseigenschaft zumindest eines Merkmals die Auswahl zumindest eines von einer Vielzahl möglicher Merkmalen einschließt, wobei die Auswahl unter Berücksichtigung der folgenden Schritte durchgeführt wird.

In einem Schritt S3a wird Merkmalsmodell erstellt, wobei das Merkmalsmodell beschreibt, mit welchen zur Verfügung stehenden Informationsquellen und unter welchen Bedingungen, insbesondere unter welchem Beobachtungswinkel und/oder bei welcher Entfernung ein Merkmal beobachtet werden kann.

In einem Schritt S3b wird Sensormodell erstellt, wobei das Sensormodell beschreibt, welchen Teil der Karte die jeweils zur Verfügung stehenden Informationsquellen aktuell mit welcher Spezifikation, insbesondere mit welcher Auflösung und/oder mit welchem Rauschverhalten wahrnehmen können.

Ferner wird in einem Schritt S3c ein Umgebungsmodell erstellt, wobei das Umgebungsmodell beschreibt, ob ein Merkmal aktuell detektierbar oder es durch statische oder dynamische Objekte in Bezug auf die Informationsquellen verdeckt ist; wobei Informationen betreffend statischer Objekte dabei aus der digitalen Karte entnommen werden, während dynamische Objekte aus aufbereiteten Informationen der zumindest einen Informationsquelle ermittelt werden.

In einer weiteren Ausführungsform der Erfindung schließt das Verfahren den Schritt ein, dass aus dem Merkmalsmodell, dem Sensormodell und dem Umgebungsmodell eine Erwartungshypothese für ein ausgewähltes Merkmal erstellt und in Schritt S4 verifiziert wird.

Vorteilhafterweise ist das Merkmal eine Straßenmarkierung, ein Leitpfosten, eine Leitplanke, eine Lichtsignalanlage, ein Verkehrszeichen, ein befahrbarer Raum, eine Verkehrsdichte, ein 3D-Weltmodell und/oder ein Geschwindigkeitsprofil.

Vorteilhafterweise sind die die Soll-Merkmalseigenschaft sowie die Ist-Merkmalseigenschaft jeweils zumindest eine Eigenschaft der folgenden Eigenschaften des Merkmals: geographische Position, Abmessungen, Farbe, relative Lage bezüglich einer Informationsquelle.

Einen weiteren Gegenstand der Erfindung bildet eine Vorrichtung zur Verifizierung einer digitalen Karte eines hochautomatisierten (HAF) oder eines vollautomatisierten Fahrzeugs (VAF), insbesondere eines hochautomatisierten Fahrzeugs. Dabei umfasst die Vorrichtung zumindest ein Objektdetektionssystem zur Erfassung einer Ist-Merkmalseigenschaft eines Merkmals in der Umgebung einer Referenzposition, ein Speichermodul zur Speicherung einer digitalen Karte, vorzugsweise einer hochgenauen digitalen Karte, wobei das Speichermodul insbesondere ein zentraler Server ist, und eine Steuervorrichtung, die dazu eingerichtet ist, Daten mit dem Speichermodul auszutauschen. Erfindungsgemäß ist vorgesehen, dass die Steuervorrichtung zur Durchführung eines Verfahrens nach einem der Ansprüche 1 bis 9 eingerichtet ist.

Ferner bildet auch Computerprogramm, umfassend Programmcode zur Durchführung des Verfahrens nach einem der Ansprüche 1 bis 9, wenn das Computerprogramm auf einer Vorrichtung gemäß Anspruch 10 ausgeführt wird, einen Gegenstand der Erfindung.

Obwohl die vorliegende Erfindung im Folgenden hauptsächlich in Zusammenhang mit Personenkraftwagen beschrieben wird, ist sie darauf nicht beschränkt, sondern kann mit jeder Art von Fahrzeug Lastkraftfahrzeuge (LKW) und/oder Personenkraftwagen (PKW) genutzt werden.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt ist. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand eines bevorzugten Ausführungsbeispiels näher erläutert, wobei für gleiche Merkmale gleiche Bezugszeichen verwendet werden. Die Zeichnungen sind schematisch und zeigen:
- Fig. 1: ein Ablaufschema einer ersten Ausführungsform des erfindungsgemäßen Verfahrens; und
- Fig. 2: ein Beispiel zur Anwendung des erfindungsgemäßen Verfahrens.

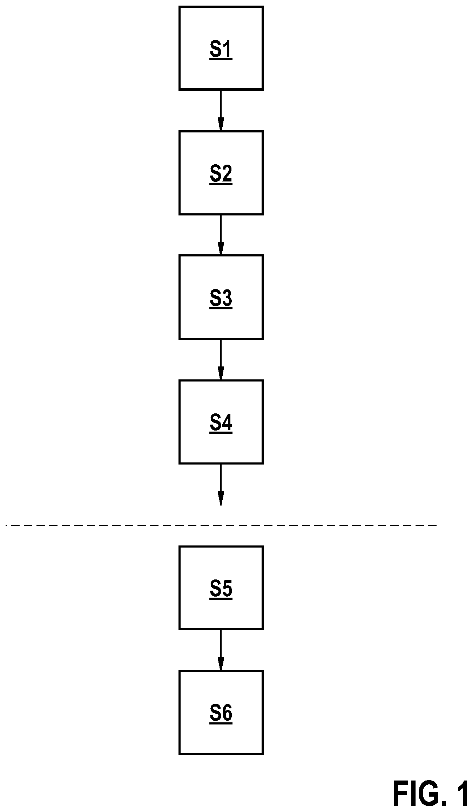

In Figur 1 ist ein Ablaufschema einer ersten Ausführungsform eines erfindungsgemäßen Verfahrens dargestellt. Dabei wird in Schritt S1 der Figur 1 eine digitale Karte, vorzugsweise eine hochgenaue digitale Karte zur Verfügung gestellt, was vorrichtungsseitig in einem Speichermodul zur Speicherung der digitalen Karte geschehen kann, wobei das Speichermodul insbesondere ein in das HAF integriertes Speichermodul oder ein zentraler Server ist.

Der Schritt S2 beinhaltet die Bestimmung einer aktuellen Referenzposition und Lokalisierung der Referenzposition in der digitalen Karte, wie es im Stand der Technik hinreichend bekannt ist. Vorrichtungsseitig geschieht dies erfindungsgemäß mittels eines Positionsmoduls, wobei das Positionsmodul vorzugsweise ein GPS-Modul (Global Positioning System) ist.

Der in Figur 1 als S3 bezeichnete Schritt umfasst das Feststellen von zumindest einer Ist-Merkmalseigenschaft eines Merkmals in der Umgebung der Referenzposition, wobei das Feststellen mittels zumindest einer Informationsquelle 12, 12', 12", 12‴ durchgeführt wird. Zu diesem/dieser Informationsquelle/n gehört ein Objektdetektionssystem des Fahrzeugs.

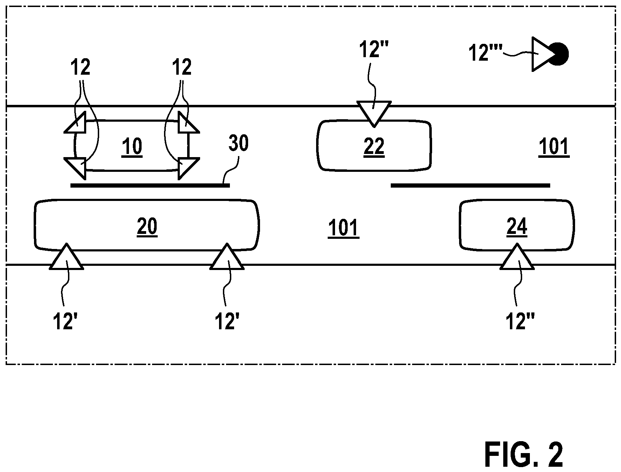

In Figur 2 ist ein Anwendungsbeispiel des erfindungsgemäßen Verfahrens dargestellt, so ist beispielsweise die Referenzposition die Fahrzeugposition eines in Figur 2 dargestellten Kartierungsfahrzeugs 10, wobei das Feststellen der Referenzposition mittels zumindest einer Informationsquelle 12, 12', 12", 12‴ durchgeführt wird.

Im Schritt S3 ist ferner vorgesehen, dass eine Vielzahl von Informationsquellen 12, 12', 12", 12‴ (Figur 2) verwendet wird, wobei die Informationsquellen 12, 12', 12", 12‴ zumindest eine oder mehrere Informationsquellen aus der folgenden Gruppe von Informationsquellen umfassen:
- Car-to-Infrastructure Systeme (C2I), die Daten an Fahrzeuge senden oder Daten von Fahrzeugen sammeln (z.B. über WLAN, LTE);
- Car-to-Car Systeme (C2C), die Daten an andere Fahrzeuge senden, vorzugsweise über ein Drahtloskommunikationsnetzwerk (WLAN) oder LTE;
- Navigationssysteme, die Straßenverläufe, Steigungen, Fahrbahnspuren und Infrastrukturinformationen im Kartenmaterial gespeichert haben;
- Datenbanken im Internet, in denen vorzugsweise Straßendaten gespeichert sind;
- Datenbanken in fahrzeugeigenen Systemen, in denen Daten langfristig gespeichert werden können;
- Fahrzeugsysteme, vorzugsweise eine Head Unit, die auf das Internet zugreifen können und aktuelle Daten aus Datenbanken ermitteln können;
- Hochgenaue Karten für hochautomatisierte oder vollautomatisiertes Fahren, in denen Daten für Lokalisierungsaufgaben abgespeichert sind, vorzugsweise Objekte mit Positionen und Abmessungen;
- Fahrerassistenzsysteme, umfassend eine oder mehrere Systeme aus den folgenden Untergruppen:
   o Spurhaltsysteme (Lane-Keeping-Support, LKS), die vorzugsweise mittels kamerabasierten Systemen eine Fahrspur ermitteln und ein Fahrzeug bei einem unfreiwilligen Verlassen der Spur wieder in die Spur zurücklenken;
   o Verkehrszeichensysteme, die auf Basis von visuellen Systemen, vorzugsweise von Videokameras, eine vorgeschriebene Geschwindigkeit ermitteln;
   o Objektdetektionssysteme, die vorzugsweise visuelle Sensoren, besonders bevorzugterweise Videokameras verwenden; und
   o Smartphones, insbesondere Kameras von Smartphones.

Das Feststellen der zumindest einen Ist-Merkmalseigenschaft erfolgt zumindest teilweise auf Grundlage von zumindest einer Soll-Merkmalseigenschaft.

Das Merkmal kann dabei grundsätzlich eine Straßenmarkierung, ein Leitpfosten, eine Leitplanke, eine Lichtsignalanlage, ein Verkehrszeichen, ein befahrbarer Raum, eine Verkehrsdichte, ein 3D-Weltmodell und/oder ein Geschwindigkeitsprofil sein. In Figur 2 ist beispielhaft eine Fahrbahnmarkierung 30 dargestellt. Dabei können die Soll-Merkmalseigenschaft sowie die Ist-Merkmalseigenschaft jeweils zumindest eine Eigenschaft der folgenden Eigenschaften des Merkmals sein: geographische Position, Abmessungen, Farbe, relative Lage bezüglich einer Informationsquelle.

Dabei ist es vorteilhaft, wenn die zumindest eine Soll-Merkmalseigenschaft des zumindest einen Merkmals in der digitalen Karte gespeichert ist, wobei vorzugsweise eine Mehrzahl an Soll-Merkmalseigenschaften wiederum einer Mehrzahl an Merkmalen in der digitalen Karte gespeichert sind.

Der mit Schritt S4 bezeichnete Verfahrensschritt der Erfindung umfasst den Vergleich der Ist-Merkmalseigenschaft mit einer Soll-Merkmalseigenschaft des Merkmals und die Ermittlung zumindest eines Differenzwertes als Ergebnis des Vergleichs.

In einem Schritt S5 kann dann zumindest teilweise auf Grundlage des Differenzwertes die Verifizierung der digitalen Karte erfolgen, wobei die digitale Karte als nicht aktuell eingestuft wird, wenn der Differenzwert einen festgelegten Schwellwert einer Abweichung erreicht oder überschreitet, und als aktuell eingestuft wird, wenn der Differenzwert unterhalb des festgelegten Schwellwerts der Abweichung bleibt.

Seitens der Vielzahl von Informationsquellen werden die gelieferten Informationen durch geeignete Algorithmen gefiltert und zusammengeführt, um die Ist-Merkmalseigenschaft festzustellen.

Weiterführend ist vorgesehen, dass das Verfahren des Weiteren den Schritt S6 einschließt, bei dem eine Information die Fahrzeugposition und den Differenzwert betreffend an einen zentralen Server übermittelt wird.

In dem Fall, dass die Karte in Schritt S5 als nicht aktuell eingestuft wurde, kann entweder eine Anforderung einer Aktualisierung der digitalen Karte bei einem zentralen Server und/oder ein erneutes Durchführen der Schritte S3 und S4 und/oder eine Anforderung der Entsendung eines Kartierungsfahrzeugs, insbesondere eines Kraftfahrzeugs und/oder eines Flugzeugs zur Kartierung einer Umgebung der Referenzposition, durchgeführt werden.

Ferner ist vorgesehen, dass die zumindest eine Soll-Merkmalseigenschaft des zumindest einen Merkmals in der digitalen Karte gespeichert ist, wobei eine Mehrzahl an Soll-Merkmalseigenschaften wiederum als eine Mehrzahl an Merkmalen in der digitalen Karte gespeichert sind. Ferner erfolgt im Schritt S3 das Feststellen der zumindest einen Ist-Merkmalseigenschaft zumindest teilweise auf Grundlage der zumindest einen Soll-Merkmalseigenschaft.

In einer vorteilhaften Ausgestaltung der Erfindung umfasst der Schritt S3 des zur Verfügung Stellens der Soll-Merkmalseigenschaft zumindest eines Merkmals die Auswahl zumindest eines von einer Vielzahl von möglichen Merkmalen, wobei die Auswahl unter Berücksichtigung der folgenden Schritte durchgeführt wird:
S3a Erstellen eines Merkmalsmodells, wobei das Merkmalsmodell beschreibt, mit welchen zur Verfügung stehenden Sensoren und unter welchen Bedingungen, insbesondere unter welchem Beobachtungswinkel und/oder bei welcher Entfernung ein Merkmal beobachtet werden kann;
S3b Erstellen eines Sensormodells, wobei das Sensormodell beschreibt, welchen Teil der Karte die jeweils zur Verfügung stehenden Sensoren aktuell mit welcher Spezifikation, insbesondere mit welcher Auflösung und/oder mit welchem Rauschverhalten wahrnehmen können;
S3c Erstellen eines Umgebungsmodells, wobei das Umgebungsmodell beschreibt, ob ein Merkmal aktuell detektierbar oder es durch statische oder dynamische Objekte in der Umgebung des HAF verdeckt ist, wobei Informationen betreffend statischer Objekte dabei aus der digitalen Karte entnommen werden, während dynamische Objekte aus aufbereiteten Sensordaten des zumindest einen Sensors ermittelt werden.

Weiterführend ist in einer Ausführungsform der Erfindung vorgesehen, dass das Verfahren den Schritt einschließt, dass aus dem Merkmalsmodell, dem Sensormodell und dem Umgebungsmodell eine Erwartungshypothese für ein ausgewähltes Merkmal erstellt und in Schritt S4 verifiziert wird.

Wie in Figur 2 dargestellt, ist das Kartierungsfahrzeug 10 mit einem Positionsmodul vorzugsweise einem GPS-Modul (Global Positioning System) ausgestattet und fährt auf einem aktuell zu befahrenen Streckenabschnitt mit zwei Fahrspuren 101, 102. Das Feststellen der Referenzposition erfolgt mittels zumindest einer Informationsquelle 12, 12', 12", 12‴. Das Kartierungsfahrzeug 10 kann einerseits mit der zumindest einen Informationsquelle 12, 12', 12", 12‴ und andererseits mit weiteren Kraftfahrzeugen 20, 22, 24 kommunizieren. Ein vorteilhafter Effekt der Erfindung ist es, dass beispielsweise auch Kartierungsdienste die Daten der verschiedenen Informationsquellen nutzen können. Dies ermöglicht eine effizientere Planung der teuren Kartierungsfahrten durch den Kartierungsdienst.

Auf diese Weise kann bereits vor der Beginn der Detektierung der zumindest einen Ist-Merkmalseigenschaft mit hoher Wahrscheinlichkeit vorausgesagt werden, ob eine Detektion zu erwarten ist und um welche Art von Detektion es sich handelt.

In einer Ausführungsform der Erfindung ist vorgesehen, dass eine Vielzahl von Sensoren zur Detektierung der zumindest einen Merkmalseigenschaft verwendet wird. Dementsprechend umfasst in dieser Ausführungsform der Schritt S6 der Verifizierung der digitalen Karte unter Durchführung einer Fusion der Detektionsergebnisse der an der Detektion beteiligten Sensoren.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

## Patentansprüche

1. Verfahren zur Verifizierung einer digitalen Karte eines hochautomatisierten Fahrzeugs (HAF) oder eines vollautomatisierten Fahrzeugs (VAF), insbesondere eines hochautomatisierten Fahrzeugs, umfassend die Schritte:
S1 zur Verfügung stellen einer digitalen Karte, vorzugsweise einer hochgenauen digitalen Karte;
S2 Bestimmung einer aktuellen Referenzposition und Lokalisierung der Referenzposition in der digitalen Karte;
S3 Feststellen von zumindest einer Ist-Merkmalseigenschaft eines Merkmals in der Umgebung der Referenzposition, wobei das Feststellen durch ein Objektdetektionssystem durchgeführt wird;
S4 Vergleich der Ist-Merkmalseigenschaft mit einer Soll-Merkmalseigenschaft des Merkmals und Ermittlung zumindest eines Differenzwertes als Ergebnis des Vergleichs.
S5 Verifizierung der digitalen Karte zumindest teilweise auf Grundlage des Differenzwertes, wobei die digitale Karte als nicht aktuell eingestuft wird, wenn der Differenzwert einen festgelegten Schwellwert einer Abweichung erreicht oder überschreitet, und als aktuell eingestuft wird, wenn der Differenzwert unterhalb des festgelegten Schwellwerts der Abweichung bleibt;
**dadurch gekennzeichnet, dass**
die zumindest eine Soll-Merkmalseigenschaft des zumindest einen Merkmals in der digitalen Karte gespeichert ist, wobei vorzugsweise eine Mehrzahl an Soll-Merkmalseigenschaften wiederum einer Mehrzahl an Merkmalen in der digitalen Karte gespeichert sind, und dass im Schritt S3 das Feststellen der zumindest einen Ist-Merkmalseigenschaft zumindest teilweise auf Grundlage der zumindest einen Soll-Merkmalseigenschaft erfolgt.

2. Verfahren nach einem der Ansprüche 1, **dadurch gekennzeichnet, dass** im Schritt S3 eine Vielzahl von Informationsquellen verwendet wird, wobei die Informationsquellen zumindest eine oder mehrere Informationsquellen aus der folgenden Gruppe von Informationsquellen umfassen:
• Car-to-Infrastructure Systeme (C2I), die Daten an Fahrzeuge senden oder Daten von Fahrzeugen sammeln (z.B. über WLAN, LTE);
• Car-to-Car Systeme (C2C), die Daten an andere Fahrzeuge senden, vorzugsweise über ein Drahtloskommunikationsnetzwerk (WLAN) oder LTE;
• Navigationssysteme, die Straßenverläufe, Steigungen, Fahrbahnspuren und Infrastrukturinformationen im Kartenmaterial gespeichert haben;
• Datenbanken im Internet, in denen vorzugsweise Straßendaten gespeichert sind;
• Datenbanken in fahrzeugeigenen Systemen, in denen Daten langfristig gespeichert werden können;
• Fahrzeugsysteme, vorzugsweise eine Head Unit, die auf das Internet zugreifen können und aktuelle Daten aus Datenbanken ermitteln können.
• Hochgenaue Karten für hochautomatisierte oder vollautomatisiertes Fahren, in denen Daten für Lokalisierungsaufgaben abgespeichert sind, vorzugsweise Objekte mit Positionen und Abmessungen;
• Fahrerassistenzsyteme, umfassend eine oder mehrere Systeme aus den folgenden Untergruppen:
o Spurhaltsysteme (Lane-Keeping-Support, LKS), die vorzugsweise mittels kamerabasierten Systemen eine Fahrspur ermitteln und ein Fahrzeug bei einem unfreiwilligen Verlassen der Spur wieder in die Spur zurücklenken;
o Verkehrszeichensysteme, die auf Basis von visuellen Systemen, vorzugsweise von Videokameras, eine vorgeschriebene Geschwindigkeit ermitteln;
o Objektdetektionssysteme, die vorzugsweise visuelle Sensoren, besonders bevorzugterweise Videokameras verwenden; und
o Smartphones, insbesondere Kameras von Smartphones.

3. Verfahren nach Anspruch 2, **dadurch gekennzeichnet, dass** die seitens der Vielzahl von Informationsquellen gelieferten Informationen durch geeignete Algorithmen gefiltert und zusammengeführt werden, um die Ist-Merkmalseigenschaft festzustellen.

4. Verfahren nach einem der vorstehenden Ansprüche, **dadurch gekennzeichnet, dass** das Verfahren des weiteren den folgenden Schritt umfasst:
S6 Übermitteln einer Information die Fahrzeugposition und den Differenzwert betreffend an einen zentralen Server.

5. Verfahren nach einem der vorstehenden Ansprüche, **dadurch gekennzeichnet, dass** in dem Fall, dass die Karte in Schritt S5 als nicht aktuell eingestuft wurde, zumindest eine der folgenden Aktionen ausgeführt wird:
• Anforderung einer Aktualisierung der digitalen Karte bei einem zentralen Server;
• Erneutes Durchführen der Schritte S3 und S4
• Anforderung der Entsendung eines Kartierungsfahrzeugs, insbesondere eines Kraftfahrzeugs und/oder eines Flugzeugs zur Kartierung einer Umgebung der Referenzposition.

6. Verfahren nach einem der vorstehenden Ansprüche, **dadurch gekennzeichnet, dass** der Schritt S3 des zur Verfügung Stellens der Soll-Merkmalseigenschaft zumindest eines Merkmals die Auswahl zumindest eines von einer Vielzahl möglicher Merkmalen einschließt, wobei die Auswahl unter Berücksichtigung der folgenden Schritte durchgeführt wird:
S3a Erstellen eines Merkmalsmodells, wobei das Merkmalsmodell beschreibt, mit welchen zur Verfügung stehenden Informationsquellen und unter welchen Bedingungen, insbesondere unter welchem Beobachtungswinkel und/oder bei welcher Entfernung ein Merkmal beobachtet werden kann;
S3b Erstellen eines Sensormodells, wobei das Sensormodell beschreibt, welchen Teil der Karte die jeweils zur Verfügung stehenden Informationsquellen aktuell mit welcher Spezifikation, insbesondere mit welcher Auflösung und/oder mit welchem Rauschverhalten wahrnehmen können;
S3c Erstellen eines Umgebungsmodells, wobei das Umgebungsmodell beschreibt, ob ein Merkmal aktuell detektierbar oder es durch statische oder dynamische Objekte in Bezug auf die Informationsquellen verdeckt ist; wobei Informationen betreffend statischer Objekte dabei aus der digitalen Karte entnommen werden, während dynamische Objekte aus aufbereiteten Informationen der zumindest einen Informationsquelle ermittelt werden.

7. Verfahren nach Anspruch 6, **dadurch gekennzeichnet, dass** das Verfahren den Schritt einschließt, dass aus dem Merkmalsmodell, dem Sensormodell und dem Umgebungsmodell eine Erwartungshypothese für ein ausgewähltes Merkmal erstellt und in Schritt S4 verifiziert wird.

8. Verfahren nach Anspruch einem der vorstehenden Ansprüche, **dadurch gekennzeichnet, dass** das Merkmal eine Straßenmarkierung, ein Leitpfosten, eine Leitplanke, eine Lichtsignalanlage, ein Verkehrszeichen, ein befahrbarer Raum, eine Verkehrsdichte, ein 3D-Weltmodell und/oder ein Geschwindigkeitsprofil ist.

9. Verfahren nach einem der vorstehenden Ansprüche, **dadurch gekennzeichnet, dass** die Soll-Merkmalseigenschaft sowie die Ist-Merkmalseigenschaft jeweils zumindest eine Eigenschaft der folgenden Eigenschaften des Merkmals sind: geographische Position, Abmessungen, Farbe, relative Lage bezüglich einer Informationsquelle.

10. Vorrichtung zur Verifizierung einer digitalen Karte eines hochautomatisierten Fahrzeugs (HAF) oder eines vollautomatisierten Fahrzeug (VAF), umfassend
• zumindest ein Objektdetektionssystem zur Erfassung einer Ist-Merkmalseigenschaft eines Merkmals in der Umgebung einer Referenzposition;
• ein Speichermodul zur Speicherung einer digitalen Karte, vorzugsweise einer hochgenauen digitalen Karte, wobei das Speichermodul insbesondere ein zentraler Server ist;
• eine Steuervorrichtung, die dazu eingerichtet ist, Daten mit dem Speichermodul auszutauschen,
**dadurch gekennzeichnet, dass**
die Steuervorrichtung zur Durchführung eines Verfahrens nach einem der Ansprüche 1 bis 9 eingerichtet ist.

11. Computerprogramm, umfassend Programmcode zur Durchführung des Verfahrens nach einem der Ansprüche 1 bis 9, wenn das Computerprogramm auf einer Vorrichtung gemäß Anspruch 10 ausgeführt wird.

## Claims

1. Method for verifying a digital map of a highly automated vehicle (HAV) or of a fully automated vehicle (FAV), in particular of a highly automated vehicle,
comprising the steps of:
S1 providing a digital map, preferably a highly accurate digital map;
S2 determining a current reference position and locating the reference position in the digital map;
S3 detecting at least one actual feature property of a feature in the environment of the reference position, wherein the detection is carried out by an object detection system;
S4 comparing the actual feature property with a target feature property of the feature and ascertaining at least one difference value as the result of the comparison;
S5 verifying the digital map at least partially on the basis of the difference value, wherein the digital map is classified as not up-to-date if the difference value reaches or exceeds a stipulated threshold value for a deviation, and is classified as up-to-date if the difference value remains below the stipulated threshold value for the deviation,
**characterized in that**
the at least one target feature property of the at least one feature is stored in the digital map, wherein a plurality of target feature properties of in turn a plurality of features are preferably stored in the digital map, and **in that**, in step S3, the at least one actual feature property is detected at least partially on the basis of the at least one target feature property.

2. Method according to Claim 1, **characterized in that** a multiplicity of information sources are used in step S3, wherein the information sources comprise at least one or more information sources from the following group of information sources:
• car-to-infrastructure systems (C2I) which transmit data to vehicles or collect data from vehicles (for example via WLAN, LTE);
• car-to-car systems (C2C) which transmit data to other vehicles, preferably via a wireless communication network (WLAN) or LTE;
• navigation systems which have stored road courses, gradients, road lanes and infrastructure information in the map material;
• databases on the Internet which preferably store road data;
• databases in the vehicle's own systems which can store data in the long term;
• vehicle systems, preferably a head unit, which can access the Internet and can ascertain up-to-date data from databases;
• highly accurate maps for highly automated or fully automated driving which store data for localization tasks, preferably objects with positions and dimensions;
• driver assistance systems comprising one or more systems from the following subgroups:
o lane-keeping systems (lane-keeping support, LKS) which preferably ascertain a lane by means of camera-based systems and steer a vehicle back into the lane again if the lane is unintentionally left;
o traffic sign systems which ascertain a prescribed speed on the basis of visual systems, preferably video cameras;
o object detection systems which preferably use visual sensors, particularly preferably video cameras; and
o smartphones, in particular cameras of smartphones.

3. Method according to Claim 2, **characterized in that** the information provided by the multiplicity of information sources is filtered and combined by means of suitable algorithms in order to detect the actual feature property.

4. Method according to one of the preceding claims, **characterized in that** the method furthermore comprises the following step of:
S6 transmitting an item of information relating to the vehicle position and the difference value to a central server.

5. Method according to one of the preceding claims, **characterized in that**, if the map has been classified as not up-to-date in step S5, at least one of the following actions is carried out:
• requesting a central server to update the digital map;
• carrying out steps S3 and S4 again;
• requesting the deployment of a mapping vehicle, in particular a motor vehicle and/or an aircraft for mapping an environment of the reference position.

6. Method according to one of the preceding claims, **characterized in that** step S3 of providing the target feature property of at least one feature includes selecting at least one feature from a multiplicity of possible features, wherein the selection is made taking into account the following steps:
S3a creating a feature model, wherein the feature model describes with which available information sources and under what conditions, in particular at what observation angle and/or at what distance, a feature can be observed;
S3b creating a sensor model, wherein the sensor model describes what part of the map the respective available information sources can currently perceive with what specification, in particular with what resolution and/or with what noise behaviour;
S3c creating an environmental model, wherein the environmental model describes whether a feature can currently be detected or is concealed by static or dynamic objects with respect to the information sources, wherein information relating to static objects is taken in this case from the digital map, whereas dynamic objects are ascertained from processed information from the at least one information source.

7. Method according to Claim 6, **characterized in that** the method includes the step of creating an expectation hypothesis for a selected feature from the feature model, the sensor model and the environmental model and verifying it in step S4.

8. Method according to one of the preceding claims, **characterized in that** the feature is a road marking, a reflector post, a crash barrier, a light signalling system, a road sign, an area which can be driven through, a traffic density, a 3D world model and/or a speed profile.

9. Method according to one of the preceding claims, **characterized in that** the target feature property and the actual feature property are each at least one property of the following properties of the feature: geographical position, dimensions, colour, relative position with respect to an information source.

10. Apparatus for verifying a digital map of a highly automated vehicle (HAV) or of a fully automated vehicle (FAV), comprising
• at least one object detection system for capturing an actual feature property of a feature in the environment of a reference position;
• a storage module for storing a digital map, preferably a highly accurate digital map, wherein the storage module is, in particular, a central server;
• a control apparatus which is configured to interchange data with the storage module,
**characterized in that**
the control apparatus is configured to carry out a method according to one of Claims 1 to 9.

11. Computer program comprising program code for carrying out the method according to one of Claims 1 to 9 when the computer program is executed on an apparatus according to Claim 10.

## Revendications

1. Procédé permettant de vérifier une carte numérique d'un véhicule hautement automatisé (HAF) ou d'un véhicule entièrement automatisé (VAF), en particulier d'un véhicule hautement automatisé, comprenant les étapes consistant à :
S1 fournir une carte numérique, de préférence une carte numérique de haute précision ;
S2 déterminer une position de référence actuelle et localiser la position de référence sur la carte numérique ;
S3 constater au moins une propriété de caractéristique réelle d'une caractéristique dans l'environnement de la position de référence, la constatation étant effectuée par un système de détection d'objet ;
S4 comparer la propriété de caractéristique réelle avec une propriété de caractéristique théorique de la caractéristique et établir au moins une valeur différentielle en tant que résultat de la comparaison ;
S5 vérifier la carte numérique au moins partiellement sur la base de la valeur différentielle, la carte numérique n'étant pas classifiée comme actuelle si la valeur différentielle atteint ou dépasse une valeur seuil fixée d'un écart, et étant classifiée comme actuelle si la valeur différentielle reste au-dessous de la valeur seuil fixée de l'écart ;
**caractérisé en ce que** ladite au moins une propriété de caractéristique théorique de ladite au moins une caractéristique est stockée sur la carte numérique, dans lequel de préférence une pluralité de propriétés de caractéristique théoriques à son tour d'une pluralité de caractéristiques est stockée sur la carte numérique, et **en ce qu'**à l'étape S3, la constatation de ladite au moins une propriété de caractéristique réelle est effectuée au moins partiellement sur la base de ladite au moins une propriété de caractéristique théorique.

2. Procédé selon la revendication 1, **caractérisé en ce qu'**à l'étape S3, une pluralité de sources d'information est utilisée, les sources d'information comprenant au moins une ou plusieurs sources d'information issues du groupe suivant de sources d'information :
• des systèmes véhicule à infrastructure (C2I) qui envoient des données à des véhicules ou collectent des données de véhicules (par ex. par WLAN, LTE) ;
• des systèmes véhicule à véhicule (C2C) qui envoient des données à d'autres véhicules, de préférence par un réseau de communication sans fil (WLAN) ou LTE ;
• des systèmes de navigation qui ont stocké des tracés de route, des pentes, des voies de chaussée et des informations d'infrastructure sur les cartes ;
• des bases de données sur internet dans lesquelles sont stockées de préférence des données routières ;
• des bases de données dans des systèmes propres au véhicule dans lesquelles des données peuvent être stockées à long terme ;
• des systèmes de véhicule, de préférence une unité principale, qui peuvent accéder à internet et peuvent établir des données actuelles à partir de bases de données ;
• des cartes de haute précision pour la conduite hautement automatisée ou entièrement automatisée, sur lesquelles sont stockées des données destinées à des tâches de localisation, de préférence des objets avec des positions et des dimensions ;
• des systèmes d'assistance au conducteur, comprenant un ou plusieurs systèmes issus des sous-groupes suivants :
o des systèmes de suivi de voie (« Lane-Keeping Support », LKS) qui établissent une voie de préférence au moyen de systèmes à base de caméra et redirigent un véhicule sur la voie en cas d'écart involontaire de la voie ;
o des systèmes de signalisation routière qui établissent une vitesse imposée sur la base de systèmes visuels, de préférence de caméras vidéo ;
o des systèmes de détection d'objets qui utilisent de préférence des capteurs visuels, de façon particulièrement préférée des caméras vidéo ; et
o des smartphones, en particulier des caméras de smartphone.

3. Procédé selon la revendication 2, **caractérisé en ce que** les informations fournies de la part de la pluralité de sources d'information sont filtrées et regroupées par des algorithmes adéquats pour constater la propriété de caractéristique réelle.

4. Procédé selon l'une quelconque des revendications précédentes, **caractérisé en ce que** le procédé comprend en outre l'étape suivante consistant à :
S6 transmettre à un serveur central une information concernant la position de véhicule et la valeur différentielle.

5. Procédé selon l'une quelconque des revendications précédentes, **caractérisé en ce que** si la carte à l'étape S5 n'a pas été classifiée comme actuelle, au moins l'une des actions suivantes est effectuée :
• demande de mise à jour de la carte numérique auprès d'un serveur central ;
• nouvelle exécution des étapes S3 et S4 ;
• demande d'envoi d'un véhicule de cartographie, en particulier d'un véhicule automobile et/ou d'un avion pour cartographier un environnement de la position de référence.

6. Procédé selon l'une quelconque des revendications précédentes, **caractérisé en ce que** l'étape S3 de fourniture de la propriété de caractéristique théorique d'au moins une caractéristique comprend la sélection d'au moins une caractéristique parmi une pluralité de caractéristiques possibles, la sélection étant effectuée en tenant compte des étapes suivantes consistant à :
S3a créer un modèle de caractéristique, le modèle de caractéristique décrivant avec quelles sources d'information disponibles et sous quelles conditions, en particulier selon quel angle d'observation, et/ou à quelle distance, une caractéristique peut être observée ;
S3b créer un modèle de capteur, le modèle de capteur décrivant quelle partie de la carte les sources d'information respectivement disponibles peuvent actuellement percevoir avec quelle spécification, en particulier à quelle résolution et/ou avec quel niveau de bruit ;
S3c créer un modèle d'environnement, le modèle d'environnement décrivant si une caractéristique est actuellement décelable ou si elle est masquée par des objets statiques ou dynamiques par rapport aux sources d'information ; des informations concernant des objets statiques étant alors extraites de la carte numérique, alors que des objets dynamiques sont établis à partir d'informations mises en forme de ladite au moins une source d'information.

7. Procédé selon la revendication 6, **caractérisé en ce que** le procédé comprend l'étape consistant à créer à partir du modèle de caractéristique, du modèle de capteur et du modèle d'environnement une hypothèse prévisionnelle pour une caractéristique sélectionnée, et à la vérifier à l'étape S4.

8. Procédé selon l'une quelconque des revendications précédentes, **caractérisé en ce que** la caractéristique est un marquage au sol, un délinéateur, une glissière de sécurité, un feu de signalisation, un panneau routier, un espace carrossable, une densité de trafic, un modèle du monde en 3D et/ou un profil de vitesse.

9. Procédé selon l'une quelconque des revendications précédentes, **caractérisé en ce que** la propriété de caractéristique théorique ainsi que la propriété de caractéristique réelle sont respectivement au moins une propriété parmi les propriétés suivantes de la caractéristique : la position géographique, les dimensions, la couleur, la position relative par rapport à une source d'information.

10. Dispositif permettant de vérifier une carte numérique d'un véhicule hautement automatisé (HAF) ou d'un véhicule entièrement automatisé (VAF), comprenant
• au moins un système de détection d'objet permettant de détecter une propriété de caractéristique réelle d'une caractéristique dans l'environnement d'une position de référence ;
• un module de stockage permettant de stocker une carte numérique, de préférence une carte numérique de haute précision, le module de stockage étant en particulier un serveur central ;
• un dispositif de commande qui est aménagé pour échanger des données avec le module de stockage,
**caractérisé en ce que** le dispositif de commande est conçu pour exécuter un procédé selon l'une quelconque des revendications 1 à 9.

11. Programme informatique, comprenant du code programme pour exécuter le procédé selon l'une quelconque des revendications 1 à 9 si le programme informatique est exécuté sur un dispositif selon la revendication 10.
